# EUROPEAN PATENT APPLICATION

(11) **EP 4 641 745 A1**
(43) Date of publication of application: **29.10.2025**
(21) Application number: 23906947.9
(22) Date of filing: 18.12.2023
(51) Int. Cl.: H01M 10/0587, H01M 50/531, H01M 50/595

(54) **NONAQUEOUS ELECTROLYTE SECONDARY BATTERY**

(30) Priority: 23.12.2022 JP 2022206906
(71) Applicant: Panasonic Energy Co., Ltd., Osaka 570-8511 (JP)
(72) Inventor: NATSUMEDA, Syunsuke, Kadoma-shi, Osaka 571-0057 (JP)
(74) Representative: Novagraaf International SA
(86) International application number: PCT/JP2023/045204
(87) International publication number: WO 2024/135586

(57) **Abstract**

The present invention provides a nonaqueous electrolyte secondary battery which is suppressed in deformation of a negative electrode. A nonaqueous electrolyte secondary battery according to one embodiment of the present disclosure is provided with a wound electrode body that is obtained by winding a positive electrode and a negative electrode, with a separator being interposed therebetween, and an outer package in which the electrode body is housed. With respect to this nonaqueous electrolyte secondary battery, the negative electrode comprises a band-like negative electrode collector and negative electrode mixture layers that are formed on both surfaces of the negative electrode collector, while having a non-facing part that is wound so as not to face the positive electrode from the winding start end, with the separator being interposed therebetween; the positive electrode comprises a band-like positive electrode collector and positive electrode mixture layers that are formed on both surfaces of the positive electrode collector; a positive electrode exposure part, in which the positive electrode collector is exposed, is formed on the inner winding side of a winding start end part of the positive electrode; and a first insulating tape is bonded to the inner winding side of the positive electrode so as to extend across the winding start ends of the positive electrode mixture layers.

## Description

### TECHNICAL FIELD

The present disclosure relates to a non-aqueous electrolyte secondary battery.

### BACKGROUND ART

Conventionally, non-aqueous electrolyte secondary batteries have widely been used, in which a wound electrode assembly formed by winding strip-shaped positive electrode and negative electrode with a separator in between is housed in an outer casing. Patent Literature 1 discloses a method of sticking an insulating tape to the surface of a positive electrode or a negative electrode at an internal short circuit assumed position, in order to prevent an internal short circuit from occurring due to burrs of the positive electrode and the negative electrode in a secondary battery comprising a wound electrode assembly.

### CITATION LIST

### PATENT LITERATURE

PATENT LITERATURE 1: Japanese Unexamined Patent Application Publication No. 2002-42881

### SUMMARY

Incidentally, in secondary batteries with a wound electrode assembly housed in the outer casing, pressure acts on the electrode assembly from the outer casing when the electrode assembly expands during a charge and discharge cycle. In this case, there is a risk of an internal short circuit occurring in the electrode assembly due to bending or other deformation of the negative electrode that faces a winding inner end portion of the positive electrode. The technology disclosed in Patent Literature 1 does not take into account the deformation of the negative electrode when the electrode assembly expands, and there is still room for improvement.

It is an advantage of the present invention to provide a non-aqueous electrolyte secondary battery in which deformation of a negative electrode is restrained.

A non-aqueous electrolyte secondary battery in one aspect of the present disclosure comprises: a wound electrode assembly having a positive electrode and a negative electrode wound with a separator in between; and an outer casing that houses the electrode assembly, in which the negative electrode includes a strip-shaped negative electrode current collector and a negative electrode mixture layer formed on both surfaces of the negative electrode current collector, and includes a non-facing portion that is wound from a winding start end in a state not facing the positive electrode via the separator, the positive electrode includes a strip-shaped positive electrode current collector and a positive electrode mixture layer formed on both surfaces of the positive electrode current collector, a positive electrode exposed portion in which the positive electrode current collector is exposed is formed on a winding inner side of a winding start end portion of the positive electrode, and a first insulating tape is stuck to the winding inner side of the positive electrode so as to extend over a winding start end of the positive electrode mixture layer.

The non-aqueous electrolyte secondary battery according to the present disclosure can restrain deformation of the negative electrode, which can be a cause of the internal short circuit.

### BRIEF DESCRIPTION OF DRAWING

FIG. 1 is an axial sectional view of a cylindrical secondary battery as one example of an embodiment.
FIG. 2 is a perspective view of a wound electrode assembly comprised in the secondary battery shown in FIG. 1.
FIG. 3 is a sectional view showing in an expanded state the positional relationship between a positive electrode and a negative electrode that constitute the electrode assembly according to one example of the embodiment.
FIG. 4 is an enlarged sectional view of the vicinity of the winding start end of the positive electrode according to another example of the embodiment.
FIG. 5 is a radial sectional view of the electrode assembly in the vicinity of its winding center axis according to one example of the embodiment.

### DESCRIPTION OF EMBODIMENTS

Hereinafter, one example of an embodiment of a cylindrical secondary battery according to the present disclosure will be described in detail with reference to the drawings. In the following description, specific shapes, materials, numerical values, directions, or the like, are examples for easy understanding of the present disclosure, and they can be appropriately changed in accordance with the specifications of the cylindrical secondary battery. Moreover, when a plurality of embodiments or modifications are included in the following description, it is assumed from the beginning that their characteristic portions are combined and used as appropriate. In this specification, "to" between upper and lower limit values signifies the range including these upper and lower limit values.

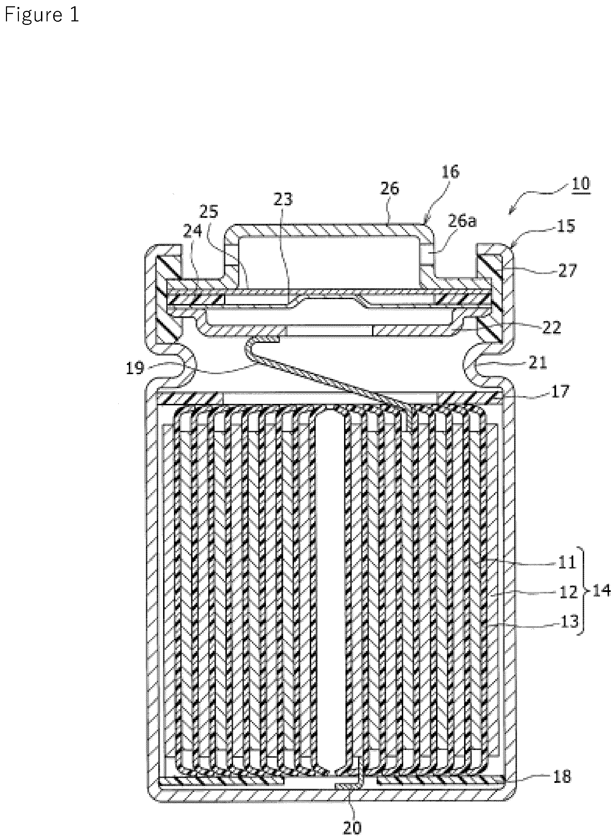

FIG. 1 is an axial sectional view of a cylindrical secondary battery 10 as one example of the embodiment. In the secondary battery 10 shown in FIG. 1, an electrode assembly 14 and non-aqueous electrolyte (not shown) are housed in an outer casing 15. The electrode assembly 14 has a wound structure in which a positive electrode 11 and a negative electrode 12 are wound with a separator 13 in between. As a non-aqueous solvent (organic solvents) of the non-aqueous electrolyte, there may be used carbonates, lactones, ethers, ketones, esters, or the like, and two or more of these solvents can be mixed and used. When two or more of these solvents are mixed and used, a mixed solvent containing cyclic carbonates and chain carbonates is preferably used. Examples of the cyclic carbonates to be used may include ethylene carbonate (EC), propylene carbonate (PC), and butylene carbonate (BC), and examples of the chain carbonates to be used may include dimethylcarbonate (DMC), ethylmethylcarbonate (EMC), and diethylcarbonate (DEC). As electrolyte salt of the non-aqueous electrolyte, LiPF₆, LiBF₄, LiCF₃SO₃, or the like and mixtures of these may be used. The amount of electrolyte salt dissolved in the non-aqueous solvent may be, for example, greater than or equal to 0.5 mol/L and less than or equal to 2.0 mol/L. Hereinafter, for the convenience of description, the side of a sealing assembly 16 is defined as "upper side", and a bottom side of the outer casing 15 is defined as "lower side".

The inside of the secondary battery 10 is sealed by closing an opening portion of the outer casing 15 with the sealing assembly 16. Insulating plates 17 and 18 are provided above and below the electrode assembly 14, respectively. A positive electrode lead 19 extends upward through a through-hole of the insulating plate 17 and is welded to the lower surface of a filter 22, which is a bottom plate of the sealing assembly 16. In the secondary battery 10, a cap 26, which is the top plate of the sealing assembly 16 electrically connected with the filter 22, serves as a positive electrode terminal. On the other hand, a negative electrode lead 20 extends toward a bottom of the outer casing 15 through a through-hole of the insulating plate 18, and is welded to the inner surface of the bottom of the outer casing 15. In the secondary battery 10, the outer casing 15 serves as a negative electrode terminal. Here, when the negative electrode lead 20 is installed in the vicinity of a winding terminal end, the negative electrode lead 20 extends toward the bottom of the outer casing 15 along the outside of the insulating plate 18, and is welded to the inner surface of the bottom of the outer casing 15.

The outer casing 15 is, for example, a metallic outer casing in a bottomed cylindrical shape. Between the outer casing 15 and the sealing assembly 16, a gasket 27 is provided to ensure sealability of the inside of the secondary battery 10. The outer casing 15 includes a grooved portion 21 formed by, for example, pressing a side surface portion from outside to support the sealing assembly 16. The grooved portion 21 is preferably formed in an annular shape along a circumferential direction of the outer casing 15 to support the sealing assembly 16 with its upper surface.

The sealing assembly 16 includes the filter 22, a lower vent member 23, an insulating member 24, an upper vent member 25, and the cap 26 stacked in this order from the side of the electrode assembly 14. Each member constituting the sealing assembly 16 has, for example, a disc shape or a ring shape, and each member except the insulating member 24 is electrically connected to each other. The lower vent member 23 and the upper vent member 25 are connected to each other at their respective center portions with the insulating member 24 interposed between their respective circumferential edge portions. When the internal pressure of the battery rises due to abnormal heat generation, the lower vent member 23 breaks, for example, and this causes the upper vent member 25 to swell toward the cap 26 and be separated from the lower vent member 23, so that the electrical connection between both members is cut off. As the internal pressure further rises, the upper vent member 25 breaks, so that gas is exhausted through an opening portion 26a of the cap 26.

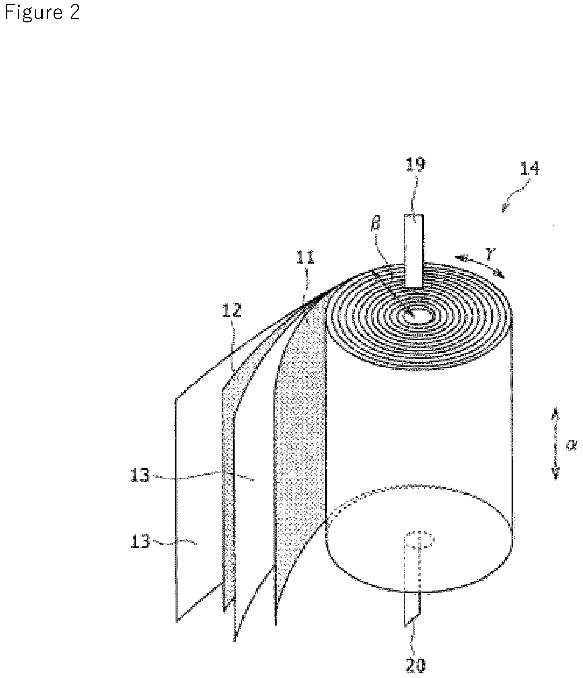

Description is now given of the electrode assembly 14 with reference to FIG. 2. FIG. 2 is a perspective view of the electrode assembly 14. The electrode assembly 14 has a winding structure in which the positive electrode 11 and the negative electrode 12 are wound in a spiral shape with the separator 13 in between as described above. The positive electrode 11, the negative electrode 12, and the separator 13, which are all formed into a strip shape, are wound in a spiral shape around a winding axis so as to be stacked alternately in a radial direction β of the electrode assembly 14. In the radial direction β, the side of the winding axis is referred to as a winding inner side, and its opposite side is referred to as a winding outer side. In the electrode assembly 14, the longitudinal direction of the positive electrode 11 and the negative electrode 12 is a winding direction γ, and the width direction of the positive electrode 11 and the negative electrode 12 is an axial direction α. In the winding direction γ, the side of the winding axis is referred to as a winding start side, and its opposite side is referred to as a winding terminal side. In the positive electrode 11 and the negative electrode 12 as well as in a first insulating tape 50 and a second insulating tape 52 described later, an end on the winding start side is referred to as a winding start end, and an end on the winding terminal side is referred to as a winding terminal end. At the upper end of the electrode assembly 14, the positive electrode lead 19 extends in the axial direction α from substantially the center in the radial direction extending from the center to the outermost circumference of the electrode assembly 14. At the lower end of the electrode assembly 14, the negative electrode lead 20 extends in the axial direction α from the vicinity of the winding axis.

As the separator 13, for example, a porous sheet with ion permeability and insulation properties is used. Specific examples of the porous sheet may include microporous thin films, woven fabrics, and non-woven fabrics. As the materials of the separator, olefin resin such as polyethylene and polypropylene, cellulose, and the like are preferable. The separator 13 may be a laminate having a cellulose fiber layer and a thermoplastic resin fiber layer made of olefin resin or the like. The separator 13 may be a multi-layer separator including a polyethylene layer and a polypropylene layer, and may also have a material, such as aramid resin and ceramic, coated on the surface thereof.

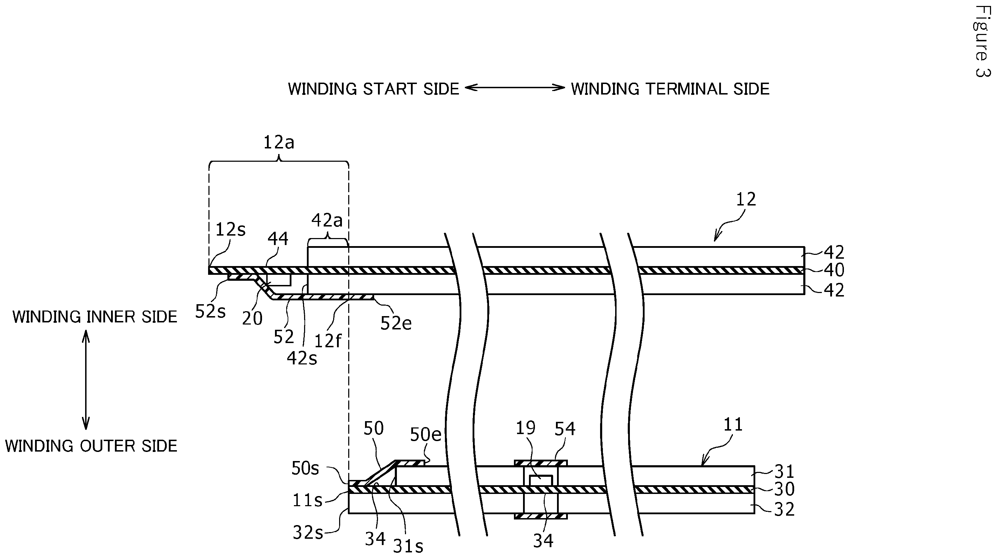

Detailed description is now given of the positive electrode 11 and the negative electrode 12 that constitute the electrode assembly 14 with reference to FIGS. 3 to 5. FIG. 3 is a sectional view showing in an expanded state the positional relationship between the positive electrode 11 and the negative electrode 12 that constitute the electrode assembly 14 according to one example of the embodiment.

The positive electrode 11 includes a strip-shaped positive electrode current collector 30, a positive electrode mixture layer 31 formed on the winding inner side of the positive electrode current collector 30, and a positive electrode mixture layer 32 formed on the winding outer side of the positive electrode current collector 30. Examples of the positive electrode current collector 30 to be used include a foil of metal such as aluminum or a film with the metal arranged on the surface thereof. The preferable positive electrode current collector 30 is a metal foil having aluminum or aluminum alloy as a main component. The positive electrode current collector 30 has a thickness of, for example, greater than or equal to 10 µm and less than or equal to 30 µm.

The positive electrode mixture layers 31, 32 are formed over the entire region, except a positive electrode exposed portion 34, on both surfaces of the positive electrode current collector 30. The positive electrode exposed portion 34 is a region where the surfaces of the positive electrode current collector 30 are not coated with the positive electrode mixture layers 31, 32. The positive electrode mixture layers 31, 32 preferably contain a positive electrode active material, a conductive agent, and a binding agent. The positive electrode 11 is fabricated by applying a positive electrode mixture slurry containing a positive electrode active material, a conductive agent, a binding agent, and a solvent such as N-methyl-2-pyrrolidone (NMP) to both surfaces of the positive electrode current collector 30 and then drying and rolling it. The positive electrode exposed portion 34 is provided, for example, by intermittent application in which the positive electrode mixture slurry is not applied to some region of the positive electrode current collector 30.

Examples of the positive active material to be used may include lithium-containing transition metal oxides, containing transition metal elements such as Co, Mn, and Ni. Although the lithium-containing transition metal oxides are not particularly limited, they are preferably compound oxides expressed by a general formula Li_{1 + x}MO₂ (in which -0.2 < x ≤ 0.2, where M includes at least one of the group consisting of Ni, Co, Mn, and Al).

As the conductive agent contained in the positive electrode mixture layers 31, 32, there may be used, for example, acetylene black (AB), carbon black (CB) such as ketjen black, and carbon materials such as graphite. As the binding agent contained in the positive electrode mixture layers 31, 32, there may be used, for example, fluororesin such as polytetrafluoroethylene (PTFE), and polyvinylidene difluoride (PVdF), polyacrylonitrile (PAN), polyimide (PI), acrylic resin, and polyolefin resin. These resins may be used together with carboxymethylcellulose (CMC) or its salts, polyethylene oxide (PEO), or the like. Any one of these materials may be used independently, or two or more of these materials may be used combinedly.

The negative electrode 12 includes a strip-shaped negative electrode current collector 40 and a negative electrode mixture layer 42 formed on both surfaces of the negative electrode current collector 40. For the negative electrode current collector 40, there may be used, for example, a foil of metal such as copper or a film with the metal arranged on the surface thereof. The negative electrode current collector 40 has a thickness of, for example, greater than or equal to 5 µm and less than or equal to 30 µm.

The negative electrode mixture layer 42 is formed over the entire region, except a negative electrode exposed portion 44, on both surfaces of the negative electrode current collector 40. The negative electrode exposed portion 44 is a region where the surfaces of the negative electrode current collector 40 are not coated with the negative electrode mixture layer 42. The negative electrode mixture layer 42 preferably contains a negative electrode active material and a binding agent. The negative electrode 12 is fabricated by, for example, applying a negative electrode mixture slurry containing a negative electrode active material, a binding agent, water, or the like to both surfaces of the negative electrode current collector 40 and then drying and rolling it. The negative electrode exposed portion 44 is provided, for example, by intermittent application in which the negative electrode mixture slurry is not applied to some region of the negative electrode current collector 40.

The negative electrode active material is not particularly limited as long as it can reversibly store and release lithium ions, and there may be used, for example, carbon materials such as natural graphite and artificial graphite, metals that alloy with lithium, such as Si and Sn, or alloys containing these metals, and oxides thereof.

As a binding agent contained in the negative electrode mixture layer 42, there may be used, for example, the same resin as in the positive electrode 11, though in the case of preparing the negative electrode mixture slurry with aqueous solvent, styrene-butadiene rubber (SBR), CMC or its salt, polyacrylic acid or its salt, polyvinyl alcohol, or the like, may be used. Any one of these materials may be used independently, or two or more of these materials may be used combinedly.

As shown in FIG. 3, the length of the negative electrode 12 in the longitudinal direction γ is greater than the length of the positive electrode 11 in the longitudinal direction γ, a winding start end 12s of the negative electrode 12 is more on the winding start side than a winding start end 11s of the positive electrode 11, and a winding terminal end of the negative electrode 12 is more on the winding terminal side than a winding terminal end of the positive electrode 11. Although not shown in FIG. 3, the length of the negative electrode 12 in the width direction (axial direction) α is greater than the length of the positive electrode 11 in the width direction α. As a result, at least a region of the positive electrode 11 where the positive electrode mixture layers 31, 32 are formed is arranged so as to face, via the separator 13, a region of the negative electrode 12 where the negative electrode mixture layer 42 is formed, so that lithium deposition in the negative electrode 12 can be prevented.

The positive electrode exposed portion 34 in which the positive electrode current collector 30 is exposed is formed on the winding inner side of the winding start end portion including the winding start end 11s of the positive electrode 11, and the first insulating tape 50 is stuck to the winding inner side of the positive electrode 11 so as to extend over a winding start end 31s of the positive electrode mixture layer 31. This restrains the deformation of the negative electrode 12 that is caused by the contact of the winding start end 11s of the positive electrode 11 with the negative electrode 12. This is presumably because the pressure applied to the negative electrode 12 by the winding start end 11s of the positive electrode 11 is reduced by decreasing the thickness of the winding start end 11s of the positive electrode 11 and imparting elasticity to the winding start end 11s using the first insulating tape 50. The positive electrode exposed portion 34 is wound around the winding center axis of the electrode assembly 14 preferably greater than or equal to 0.05 turn and less than or equal to 1.25 turn, more preferably greater than or equal to 0.08 turn and less than or equal to 0.8 turn, and particularly preferably greater than or equal to 0.1 turn and less than or equal to 0.5 turn. The sticking range of the first insulating tape 50 is, for example, greater than or equal to 0.2 turn and less than or equal to 0.8 turn. A winding start end 50s of the first insulating tape 50 preferably faces the winding start end 11s of the positive electrode 11.

In the positive electrode exposed portion 34 formed at the winding start end portion of the positive electrode 11, the positive electrode lead 19 is preferably not joined to the positive electrode current collector 30. In the example shown in FIG. 3, the positive electrode exposed portion 34 is also provided at substantially the center of the positive electrode 11 in the longitudinal direction γ, and in the positive electrode exposed portion 34, the positive electrode lead 19 is joined to the positive electrode current collector 30. This enhances the current collectability. The positive electrode exposed portion 34 to which the positive electrode lead is joined is also preferably provided on both surfaces of the positive electrode 11 so that the positive electrode exposed portions 34 overlap in the thickness direction of the positive electrode 11. The positive electrode exposed portion 34 is preferably covered with a third insulating tape 54, which has the similar configuration to the first insulating tape 50 and the second insulating tape 52 as will be described later.

In the example shown in FIG. 3, the positive electrode mixture layer 32 is formed up to the winding start end 11s on the winding outer side of the positive electrode 11. This makes it possible to increase the capacity of the battery.

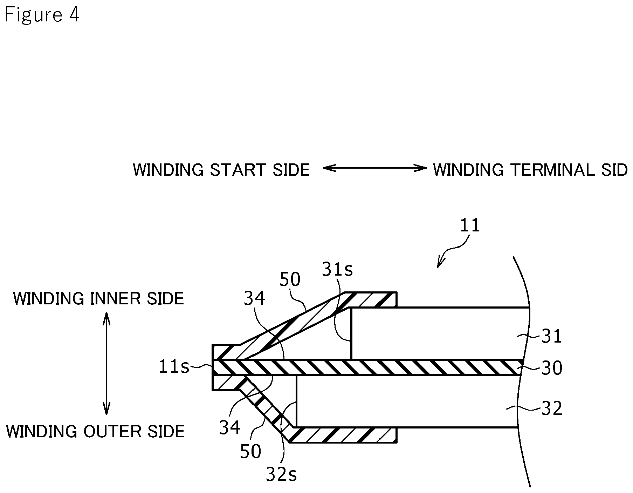

The aspect of the winding start end 11s of the positive electrode 11 is not limited to the example in FIG. 3. FIG. 4 is an enlarged sectional view of the vicinity of the winding start end 11s of the positive electrode 11 according to another example of the embodiment. As shown in FIG. 4, the positive electrode exposed portion 34 may further be formed on the winding outer side of the winding start end portion of the positive electrode 11, and the first insulating tape 50 may be stuck to the winding outer side of the positive electrode 11 so as to extend over a winding start end 32s of the positive electrode mixture layer 32. This lowers the stiffness of the winding start end 11s of the positive electrode 11, so that the deformation of the negative electrode 12 can be restrained more significantly. The first insulating tape 50 to be stuck to the winding outer surface of the positive electrode 11 is stuck, for example, at the position facing the first insulating tape 50 that is stuck to the winding inner surface.

The winding start end 31s of the positive electrode mixture layer 31 on the winding inner side of the positive electrode 11 and the winding start end 32s of the positive electrode mixture layer 32 on the winding outer side of the positive electrode 11 may face each other via the positive electrode current collector 30, though they preferably do not face each other as shown in FIG. 4. More preferably, the winding start end 31s is more on the winding terminal side than the winding start end 32s.

Description is now given of the negative electrode 12 with reference to FIG. 3. The negative electrode 12 includes a non-facing portion 12a that is wound from a winding start end 12s in the state not facing the positive electrode 11 via the separator 13. The non-facing portion 12a includes a negative electrode mixture layer forming portion 42a in which the negative electrode mixture layer 42 is continuously formed from the winding terminal side to the winding start side, and the negative electrode mixture layer forming portion 42a is preferably wound greater than or equal to 0.25 turn. Since the negative electrode mixture layer forming portion 42a is stronger than the negative electrode exposed portion 44, the negative electrode mixture layer forming portion 42a is wound and formed into a cylindrical exhaust passage, so that when gas is generated inside the secondary battery 10, the gas can be efficiently exhausted.

For example, the non-facing portion 12a includes the negative electrode exposed portion 44 more on the winding start side than a winding start end 42s of the negative electrode mixture layer forming portion 42a, and in the negative electrode exposed portion 44, the negative electrode lead 20 is joined to the negative electrode current collector 40. The negative electrode exposed portion 44 is, for example, provided on both surfaces of the negative electrode 12 so that the negative electrode exposed portions 44 overlap in the thickness direction of the negative electrode 12. The arrangement position of the negative electrode lead 20 is not limited to the example shown in FIG. 3, and the negative electrode lead 20 may be provided only in the vicinity of the winding terminal end of the negative electrode 12. The negative electrode lead 20 may also be provided in the vicinity of the winding start end and in the vicinity of the winding terminal end of the negative electrode 12. In this case, the current collectability is enhanced. The negative electrode exposed portion 44 may be formed at the winding terminal end of the negative electrode 12, and the negative electrode exposed portion 44 may be brought into contact with the inner circumferential surface of the outer casing 15 (see FIG. 1) so as to electrically connect the vicinity of the winding terminal end of the negative electrode 12 to the outer casing 15 without using the negative electrode lead 20.

The second insulating tape 52 may be stuck to the winding outer surface of the negative electrode 12 so as to extend over a facing portion 12f facing the winding start end 11s of the positive electrode 11, and a winding terminal end 52e of the second insulating tape 52 may be arranged more on the winding start side than a winding terminal end 50e of the first insulating tape. This makes it possible to restrain deposition of lithium on the surface of the negative electrode 12 around the winding terminal end 52e of the second insulating tape 52. The second insulating tape 52 may further be stuck to the winding inner surface of the negative electrode 12. The second insulating tape 52 to be stuck to the winding inner surface is stuck, for example, at the position facing the second insulating tape 52 that is stuck to the winding outer surface.

The second insulating tape 52 may be stuck so as to extend over the negative electrode lead 20. This allows the second insulating tape 52 to restrain an internal short circuit of the negative electrode lead 20. Here, the negative electrode lead 20 may be covered with an insulating tape different from the second insulating tape 52. The insulating tape has the configuration similar to the second insulating tape 52, for example.

The first insulating tape 50 and the second insulating tape 52 are tapes having insulation properties. The first insulating tape 50 and the second insulating tape 52 may have the configuration different from each other but preferably have the same configuration. Hereinafter, assuming the case where the first insulating tape 50 and the second insulating tape 52 have the same configuration, the configuration of the insulating tapes, which mean both the first insulating tape 50 and the second insulating tape 52, is described.

In the width direction α, the width of the insulating tapes may be wider than the width of the positive electrode 11 and the negative electrode 12. This makes it possible to cover the entire region of the positive electrode 11 and the negative electrode 12 in the width direction α and therefore an internal short circuit can be restrained more reliably.

The insulating tapes have, for example, a base material layer and an adhesive layer formed on the surface of the base material layer. The insulating tapes have a thickness of, for example, greater than or equal to 20 µm and less than or equal to 70 µm, and preferably have a thickness of greater than or equal to 25 µm and less than or equal to 60 µm. The thickness of the insulating tapes and respective layers can be measured by cross-sectional observation using a scanning electron microscope (SEM).

The base material layer may contain organic and inorganic materials. The main component of the organic material contained in the base material layer is preferably resin with excellent insulation properties, electrolyte resistance, heat resistance, piercing strength, and the like. Specifically, the main component of the base material layer is preferably resin, such as polypropylene (PP), or other materials. As the main component of the base material layer, there may be adopted ester resins such as polyethylene terephthalate (PET), polyimide (PI), polyphenylene sulfide, and polyamide. Any one of these resins may be used independently, or two or more of these materials may be used combinedly. The main component of the base material layer is preferably PI from the viewpoint of hardness. Meanwhile, from the viewpoint of cost, the main component of the base material layer is preferably PP since PP is inexpensive and easy to obtain, and has sufficient stiffness as the base material layer in the range of the thickness as described above. The base material layer has a thickness of, for example, greater than or equal to 10 µm and less than or equal to 45 µm, and preferably has a thickness of greater than or equal to 15 µm and less than or equal to 35 µm. The thickness of the base material layer is preferably greater than that of the adhesive layer.

The adhesive layer is a layer to provide the insulating tape with adhesiveness to the positive electrode 11. The adhesive layer is formed by coating one side of the base material layer with a sticky material such as an adhesive. The adhesive layer can be configured using an adhesive (resin) with excellent insulation properties, electrolyte resistance, and the like. The adhesive that constitutes the adhesive layer may be of a hot melt type, which manifests stickiness by heating, or of a thermoset type, which hardens by heating. From the viewpoint of productivity and the like, however, an adhesive having stickiness at room temperature is preferable. The adhesive layer is constituted of, for example, an acrylic-based adhesive or a synthetic rubber-based adhesive. The adhesive layer has a thickness of, for example, greater than or equal to 5 µm and less than or equal to 30 µm.

Here, the insulating tape is not limited to a two-layer structure, and may be a three-layer structure in which a layer containing inorganic particles is formed between the base material layer and the adhesive layer, for example. By using such a three-layer structure, the heat resistance of the insulating tape can be improved. The layer containing inorganic particles preferably has a layer structure in which the inorganic particles are dispersed in a resin matrix constituting the layer. The resin constituting the layer containing inorganic particles preferably has excellent insulation properties, electrolyte resistance, or the like, and has good adhesiveness to the inorganic particles and the base material layer. Examples of preferable resin may include acrylic resins, urethane resins, and copolymers of these. Any one of these materials may be used independently, or two or more of these materials may be used combinedly. The layer containing inorganic particles is formed by, for example, coating a resin solution containing inorganic particles on one side of the base material layer. The layer containing inorganic particles has a thickness of, for example, greater than or equal to 0.5 µm and less than or equal to 10 µm, and preferably has a thickness of greater than or equal to 1 µm and less than or equal to 5 µm.

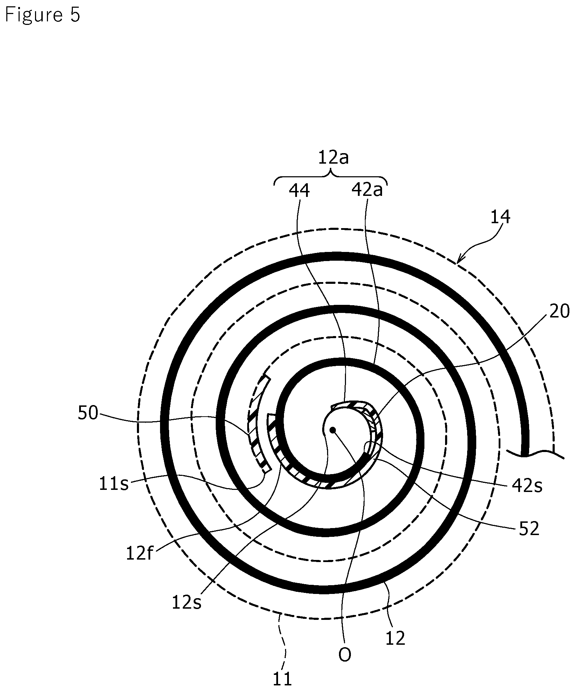

Description is now given of a sticking range of the second insulating tape 52 to the non-facing portion 12a with reference to FIG. 5. FIG. 5 is a radial sectional view of the electrode assembly 14 in the vicinity of a winding center axis O according to one example of the embodiment. The second insulating tape 52 is preferably stuck so as to extend over a winding start end 42s of the negative electrode mixture layer forming portion 42a. This allows the deformation of the negative electrode 12 to be restrained more remarkably. The second insulating tape 52 may be stuck up to the position that covers the winding start end 12s of the negative electrode 12.

As described above, according to the non-aqueous electrolyte secondary battery in the present disclosure, deformation of the negative electrode 12 can be restrained by reducing the stiffness of the winding start end 11s of the positive electrode 11.

The present invention is further described with the embodiment described below.

### Configuration 1:

A non-aqueous electrolyte secondary battery, comprising:
a wound electrode assembly having a positive electrode and a negative electrode wound with a separator in between; and
an outer casing that houses the electrode assembly, in which
the negative electrode includes a strip-shaped negative electrode current collector and a negative electrode mixture layer formed on both surfaces of the negative electrode current collector, and includes a non-facing portion that is wound from a winding start end in a state not facing the positive electrode via the separator,
the positive electrode includes a strip-shaped positive electrode current collector and a positive electrode mixture layer formed on both surfaces of the positive electrode current collector,
a positive electrode exposed portion in which the positive electrode current collector is exposed is formed on a winding inner side of a winding start end portion of the positive electrode, and
a first insulating tape is stuck to the winding inner side of the positive electrode so as to extend over a winding start end of the positive electrode mixture layer.

### Configuration 2:

The non-aqueous electrolyte secondary battery according to Configuration 1, in which
the positive electrode exposed portion is formed on a winding outer side of the winding start end portion of the positive electrode, and
the first insulating tape is stuck to the winding outer side of the positive electrode so as to extend over a winding start end of the positive electrode mixture layer.

### Configuration 3:

The non-aqueous electrolyte secondary battery according to Configuration 2, in which the winding start end of the positive electrode mixture layer on the winding inner side of the positive electrode and the winding start end of the positive electrode mixture layer on the winding outer side of the positive electrode do not face each other.

### Configuration 4:

The non-aqueous electrolyte secondary battery according to Configuration 1, in which the positive electrode mixture layer is formed up to the winding start end of the positive electrode on the winding outer side of the positive electrode.

### Configuration 5:

The non-aqueous electrolyte secondary battery according to any one of Configurations 1 to 4, in which in the positive electrode exposed portion formed at the winding start end portion of the positive electrode, a positive electrode lead is not joined to the positive electrode current collector.

### Configuration 6:

The non-aqueous electrolyte secondary battery according to any one of Configurations 1 to 5, in which
the non-facing portion includes a negative electrode mixture layer forming portion in which the negative electrode mixture layer is continuously formed from a winding terminal side to a winding start side, and
the negative electrode mixture layer forming portion is wound greater than or equal to 0.25 turn.

### Configuration 7:

The non-aqueous electrolyte secondary battery according to any one of Configurations 1 to 6, in which
a second insulating tape is stuck to a winding outer surface of the negative electrode so as to extend over a facing portion facing the winding start end of the positive electrode, and
a winding terminal end of the second insulating tape is arranged more on a winding start side than a winding terminal end of the first insulating tape.

### Configuration 8:

The non-aqueous electrolyte secondary battery according to Configuration 7, in which
the non-facing portion includes a negative electrode exposed portion in which the negative electrode current collector is exposed more on the winding start side than a winding start end of the negative electrode mixture layer forming portion,
a negative electrode lead is joined to the negative electrode current collector in the negative electrode exposed portion, and
the second insulating tape is stuck so as to extend over the negative electrode lead.

### REFERENCE SIGNS LIST

10 Secondary battery, 11 Positive electrode, 11s Winding start end, 12 Negative electrode, 12a Non-facing portion, 12f Facing portion, 12s Winding start end, 13 Separator, 14 Electrode assembly, 15 Outer casing, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening portion, 27 Gasket, 30 Positive electrode current collector, 31, 32 Positive electrode mixture layer, 34 Positive electrode exposed portion, 40 Negative electrode current collector, 42 Negative electrode mixture layer, 42a Negative electrode mixture layer forming portion, 42s Winding start end, 44 Negative electrode exposed portion, 50 First insulating tape, 50e Winding terminal end, 52 Second insulating tape, 52s Winding start end, 52e Winding terminal end, O Winding center axis

## Claims

1. A non-aqueous electrolyte secondary battery, comprising:
a wound electrode assembly having a positive electrode and a negative electrode wound with a separator in between; and
an outer casing that houses the electrode assembly, wherein
the negative electrode includes a strip-shaped negative electrode current collector and a negative electrode mixture layer formed on both surfaces of the negative electrode current collector, and includes a non-facing portion that is wound from a winding start end in a state not facing the positive electrode via the separator,
the positive electrode includes a strip-shaped positive electrode current collector and a positive electrode mixture layer formed on both surfaces of the positive electrode current collector,
a positive electrode exposed portion in which the positive electrode current collector is exposed is formed on a winding inner side of a winding start end portion of the positive electrode, and
a first insulating tape is stuck to the winding inner side of the positive electrode so as to extend over a winding start end of the positive electrode mixture layer.

2. The non-aqueous electrolyte secondary battery according to claim 1, wherein
the positive electrode exposed portion is further formed on a winding outer side of the winding start end portion of the positive electrode, and
the first insulating tape is stuck to the winding outer side of the positive electrode so as to extend over a winding start end of the positive electrode mixture layer.

3. The non-aqueous electrolyte secondary battery according to claim 2, wherein the winding start end of the positive electrode mixture layer on the winding inner side of the positive electrode and the winding start end of the positive electrode mixture layer on the winding outer side of the positive electrode do not face each other.

4. The non-aqueous electrolyte secondary battery according to claim 1, wherein the positive electrode mixture layer is formed up to the winding start end of the positive electrode on the winding outer side of the positive electrode.

5. The non-aqueous electrolyte secondary battery according to claim 1, wherein in the positive electrode exposed portion formed at the winding start end portion of the positive electrode, a positive electrode lead is not joined to the positive electrode current collector.

6. The non-aqueous electrolyte secondary battery according to claim 1, wherein
the non-facing portion includes a negative electrode mixture layer forming portion in which the negative electrode mixture layer is continuously formed from a winding terminal side to a winding start side, and
the negative electrode mixture layer forming portion is wound greater than or equal to 0.25 turn.

7. The non-aqueous electrolyte secondary battery according to claim 1, wherein
a second insulating tape is stuck to a winding outer surface of the negative electrode so as to extend over a facing portion facing the winding start end of the positive electrode, and
a winding terminal end of the second insulating tape is arranged more on a winding start side than a winding terminal end of the first insulating tape.

8. The non-aqueous electrolyte secondary battery according to claim 7, wherein
the non-facing portion includes a negative electrode exposed portion in which the negative electrode current collector is exposed more on the winding start side than a winding start end of the negative electrode mixture layer forming portion,
a negative electrode lead is joined to the negative electrode current collector in the negative electrode exposed portion, and
the second insulating tape is stuck so as to extend over the negative electrode lead.
